# EUROPEAN PATENT SPECIFICATION

(11) **EP 1 334 290 B1**
(45) Date of publication and mention of the grant of the patent: **13.12.2006**
(21) Application number: 01977501.4
(22) Date of filing: 03.10.2001
(51) Int. Cl.: F16H 7/12

(54) **ACCESSORY DRIVE SYSTEM INCLUDING A MOTOR/GENERATOR**
HILFSAGGREGATANTRIEBSYSTEM MIT MOTOR/GENERATOR
SYSTEME D'ENTRAINEMENT D'ACCESSOIRES A MOTEUR/GENERATEUR

(30) Priority: 03.10.2000 US 237428 P
(43) Date of publication of application: 13.08.2003
(73) Proprietor: The Gates Corporation, Denver, CO 80202 (US)
(72) Inventor: ALI, Imtiaz, Rochester Hills, 48307-4165 (US); LIU, Keming, Sterling Height, MI 48314 (US); OTREMBA, Jerzy, Troy, mI 48098 (US)
(74) Representative: James, Anthony Christopher W.P.
(86) International application number: PCT/US2001/031153
(87) International publication number: WO 2002/029287

(56) References cited:
- DE-A- 19 849 886
- DE-A1- 19 849 659
- US-A- 4 773 892
- US-A- 5 203 293
- US-A- 5 722 909
- PATENT ABSTRACTS OF JAPAN vol. 2000, no. 21, 3 August 2001 (2001-08-03) -& JP 2001 107827 A (TOYOTA MOTOR CORP), 17 April 2001 (2001-04-17)
- PATENT ABSTRACTS OF JAPAN vol. 014, no. 069 (M-0932), 8 February 1990 (1990-02-08) & JP 01 288656 A (MAZDA MOTOR CORP), 20 November 1989 (1989-11-20)
- PATENT ABSTRACTS OF JAPAN vol. 005, no. 162 (M-092), 17 October 1981 (1981-10-17) & JP 56 086872 A (MITSUBISHI HEAVY IND LTD), 15 July 1981 (1981-07-15)

## Description

### Background of the Invention

### Field of the Invention

This invention relates generally to internal combustion engine accessory belt drive systems each having a unitary device performing both the engine starting function and the electrical power generation function, such as a motor/generator sometimes referred to as a Gen-Star. More particularly, it relates to such systems in automotive applications. Specifically, this invention relates to a configuration for belt drive systems each having a motor/generator and each having a tensioner.

### Description of the Prior Art

Internal combustion engines commonly use power transmission belt drive systems to tap power from the engine's crankshaft and deliver it to one or more various engine auxiliaries or accessories. In automotive applications, these accessories include power steering pumps, water pumps, air conditioning compressors, fuel pumps, and alternators. Historically, such engines have had the main power takeoff point at the crankshaft protruding from the rear of the engine to which is attached the drive train for driving the wheels to move the automobile. The accessories are driven from a pulley attached to the front of the crankshaft. Each accessory is equipped with a pulley. All of the pulleys are in mechanical communication via one or more power transmission belts trained about them. Some method of tensioning each power transmission belt is provided. The power transmission belt, the pulleys, and devices accomplishing belt tensioning form the accessory belt drive system.

Earlier systems included multiple v-belts. Commonly, each belt was tensioned by manual adjustment and fixing of the position of at least one accessory or idler per belt. These are referred to as locked-center belt drives, because there is no provision for automatic movement of any of the pulleys to accommodate varying condition of the belt or of the drive as a whole. If the belt should stretch or otherwise lengthen the tension upon the belt would lessen. Further, for proper operation of the belt drive system, the tension of the belt must be set high enough to accommodate the worst case condition. Such worst case conditions can be the result of extremes of temperature, engine operation, or accessory operation.

There has been interest in making the volume, of the engine compartments of automobiles, smaller. To accommodate the smaller compartments, various aspects of the engines have become smaller, including the accessory belt drive systems. This has been accomplished, at least in part, by reducing the number of belts employed. As each belt is removed, and the number of layers extending from the front of the engine is thereby removed, the total distance the belt drive system extends from the front of the engine is reduced. Ultimately, this has resulted in the use of a single serpentine belt for many applications. A serpentine belt is so named because of the way it snakes around the various pulleys in a series of bends, both forward and backward. A v-ribbed or Micro-V (a registered trademark of The Gates Rubber Company) belt is most suited to serpentine applications.

The limitations of the locked-center approach to belt tensioning are exacerbated in serpentine applications. Accordingly, most modem serpentine belt drives include an automatic tensioner whereby the changing conditions of the belt drive system can be better accommodated. In basic form, an automatic tensioner has a framework, which attaches directly or indirectly to the cylinder block of the engine, and a pulley, which presses upon the belt in the plane of rotation of the belt drive system. A moveable member extends between the framework and the pulley and is biased to provide pressure upon the belt, via the pulley. The pressure acts to lengthen the distance about which the belt is trained and thereby causes the belt to be in tension. Various techniques and geometries have been employed to provide the biasing force. Commonly, a resilient member, such a steel spring acts to force the moveable member in a linear or rotating motion which results in the pulley tending to move in a direction toward a surface of the belt which, in turn, tends to increase tension upon the belt.

A tensioner with only these elements provides a somewhat constant force upon the surface of the belt when the system is in a resting state (i.e., the pulleys are not rotating). Dimensional instability, of the drive system caused by time, temperature, or manufacturing variation is accommodated fairly well through the action of the resilient member, at least to the limits of linearity of the resilient member and geometry of the tensioner. Thus, the tension upon the belt remains relatively constant, when the system is at rest, even though the belt may have stretched or the engine may be hot or cold. However, a tensioner with only these elements may not maintain appropriate tension upon the belt for all operating conditions of the system.

An operating belt drive system typically oscillates due to the influences of torsional vibration or other angular acceleration of the crankshaft or accessories, the influences of unbalanced conditions, or other influences. Torsional vibration of the crankshaft occurs, in part, as a result of the distinct impulses delivered to the crankshaft through the combustion cycles of each cylinder and piston combination. The oscillations lead to vibration of the belt. This, in turn, leads to vibration of the moveable portions of the tensioner. Momentum then builds in those moveable portions modifying the force the pulley exerts upon the belt surface and the tension upon the belt. The changing tension upon the belt can cause unacceptable performance for the belt drive system. In one instance, issues of short-term performance, such as where the belt of the belt drive system slips excessively limiting the system's efficiency or power transmission capability, or is excessively noisy due to slippage or otherwise, can arise. In another instance, the amount of tension necessarily applied to the belt, to have acceptable performance on the short-term, leads to long-term issues such as premature failure of one or more components of the system, including the belt, or one or more accessories.

To accommodate these issues and thus improve the performance of tensioners, damping devices have been included in tensioners. Early damped tensioners have included symmetrical damping where movement of the moveable portions of the tensioners are damped approximately equally whether the instantaneous movement is in the direction tending to increase tension upon the belt or in the direction tending to decrease tension upon the belt. Damping combines with the forces supplied by the resilient member to result in a modified biasing, at the pulley/belt interface. Other tensioners have utilized asymmetrical damping. Commonly, such tensioners are damped such that the damping upon the moveable portion is minimal when the tensioner is moving in the belt tensioning direction and maximal when moving in the belt loosening direction.

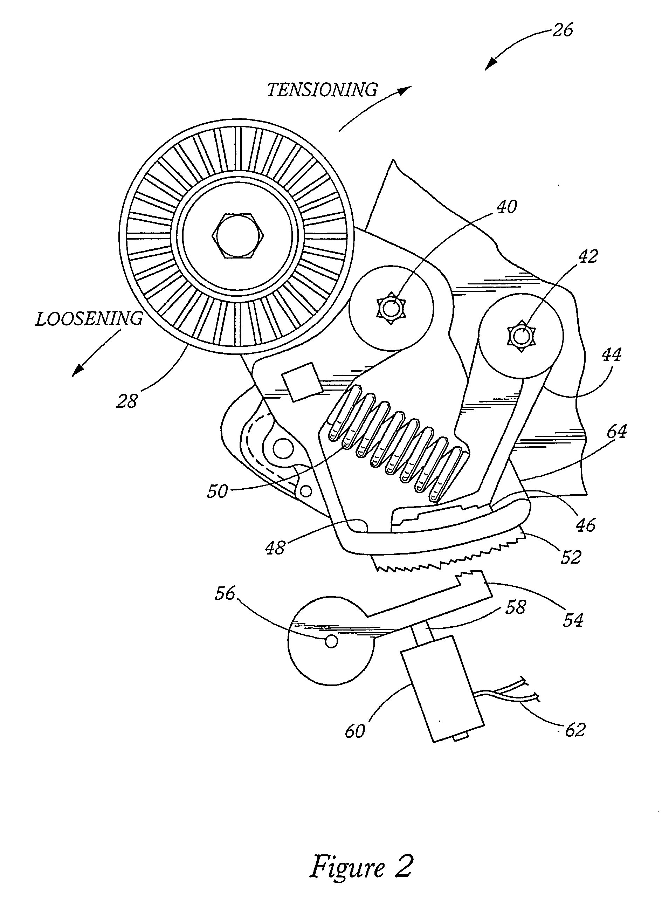

Certain approaches to asymmetrical damping have been passive in nature. The mere direction of movement of the moveable portions creates the different damping rates. In one approach, a shoe is biased against a race at an angle different from normal to the surface of the race. As a result, the relative movement of the shoe and race in one direction tends to lift the shoe from the race. This reduces the pressure at their interface, reduces the friction that gives rise to the damping, and thereby reduces the damping. The other direction tends to wedge the shoe against the race and increase the damping, as depicted in Figure 2. In another approach, described in U. S. Patent to Meckstroth et al. numbered 5,439,420, damping fluid is channeled through different orifices by valves depending upon motion to the moveable portions of the tensioner. When the tensioner moves in the tensioning direction, the fluid passes through a relatively large orifice or channel offering little resistance to the fluid movement and little damping. In the loosening direction, the fluid passes through a relatively small orifice or channel offering greater resistance and greater damping.

Another approach to asymmetrical tensioner damping has been active and can be also be found described in '420 patent. In '420 two active asymmetrical embodiments are discussed. In one, an electric solenoid deploys brake shoes. When the shoes are deployed, movement of the tensioner is damped in both directions. Additionally, a wedge cooperates with the shoes to modify the force with which they are deployed when the tensioner moves. The damping increases when the tensioner moves in the loosening direction and decreases when the tensioner moves in the tensioning direction. In another, a solenoid deploys a piston, which modifies a fluid path and thereby modifies the damping. Another tensioner approach described in the '420 patent, is to utilize a solenoid, similar to the two active asymmetrically damped tensioners, including a locking factor to switch the tensioner between two modes of operations. In one mode the tensioner operates as an automatic tensioner. In the other mode, its moveable portions are locked, causing the tensioner to act in much the same manner as a locked-center tensioner.

The '420 patent is directed toward solving unacceptable belt drive system performance created by inertial forces caused by the rotating masses of accessories and idler pulleys when rapidly decelerated. As described therein, when sudden rotational deceleration is produced at the crankshaft of the engine "the high rotational inertia of the alternator causes it to remain rotating and causes the alternator to pull the tensioner in a direction so as to loosen the belt [of the specific drive configuration depicted].... as a result the drivebelt (sic) slips ...."

Traditionally, an electric starter motor is provided to spin the crankshaft of the engine so that combustion may be initiated and the engine will begin to run. The starter motor is located near the rear of the engine and is adapted to intermittently engage the rear portion of the crankshaft through a gear train.

Currently, there is increasing pressure to reduce emissions and increase fuel economy by lowering the weight of the automobile and reducing the number of under-the-hood components. An approach taken toward these goals involves combining the function of the starter motor and the function of the alternator into a single device, a motor/generator or a Gen-Star. Also toward the goal of increasing fuel economy, the Gen-Star promotes the use of a feature called "stop-in-idle". This feature is where the engine is allowed to die when it would ordinarily idle, then be restarted when the automobile is expected to resume motion. This feature substantially increases the demands placed upon accessory belt drives. In application, the motor/generator is placed in mechanical communication with the crankshaft via the accessory belt drive. The motor/generator and associated accessory belt drive system tends to be placed at the front of the engine. However, placing these systems at other locations, including the rear of the engine is envisioned.

The advent of Gen-Star systems causes the designer, of power transmission belt drive systems, to face substantial new challenges. A significant challenge, among these, has been to develop a tensioning system that results in acceptable performance, by an accessory belt drive that includes this new device, which not only offers substantial load and rotational inertia, but also adds large driving torque into the accessory belt drive. Further, it provides this large driving torque on an intermittent basis.

DE 198 49 659 showing the features outlined in the preamble of claim 1 describes a tensioning device for a belt drive. The tensioning device comprising a tensioner-damper unit, a first tension element in contact with the traction element and a second tension element in contact with the traction element. The tensioner-damper unit acts between a first pivoting lever and a second pivoting lever. The first tension element is connected to the first pivoting lever, which pivots about a first fixed axis of pivot. The first tension element is urged by the first pivoting lever, under the action of the tensioning force of the tensioner-damper unit, against a first belt span. The second tension element is connected to the second pivoting lever. The second pivoting lever pivots about a second fixed axis of pivot. The second tension element is urged by the second pivoting lever, under the action of the tensioning force of the tensioner-damper unit, against a second belt span. A belt deflector pulley is arranged between the first span and the second span. Each of the first and second levers is formed by an inner lever starting from its fulcrum and by an outer lever arm starting from its fulcrum, the free end of each outer lever arm being connected to the associated tension element and the free end of each inner lever arm being articulated on one end of the tensioner-damper unit. The tensioner-damper unit is float-mounted between the inner lever arms and transmits the reaction forces occurring during the tensioning operation between the first span and the second span. The length of the inner lever arm and the outer lever arm of the first pivoting lever and the length of the inner lever arm and of the outer lever arm of the second pivoting lever form a ratio that is adapted to the unequal traction forces in the two spans so that the length of the inner lever arm and of the outer lever arm of the first pivoting lever form a ratio that produces a pre-tensioning force on the first span, which pre-tensioning force is different in magnitude from a pre-tensioning force produced by the second pivoting lever on the second strand.

A different tensioning system stated to be an approach for tensioning an accessory belt drive incorporating a motor/generator is disclosed in the Japanese publication of application numbered JP1997000359071. In that publication, it is disclosed to place an automatic tensioner against the span of the belt which would become the loosest span at the time the motor/generator is in it start mode, but for the presence of the tensioner. This span corresponds to the span that receives the belt immediately after the belt passes over the motor/generator pulley, when the belt is moving in its normal operating direction.

The disclosed tensioning system has been identified as less than optimal. To achieve acceptable performance in the short-term, both long-term performance must be sacrificed and the width of the belt that must be used to achieve adequate short-term performance is other than optimal.

Accordingly, there remains the need for a tensioning system that provides, at once, adequate short-term performance, adequate long-term performance, optimizes the width of the belt that may be used for any given application, and contains cost and complexity.

### Summary of the Invention

The present invention has as an object the provision of an accessory belt drive system of a configuration that improves the combination of short-term performance, long-term performance, and optimizes belt selection.

The present invention has as a further object the provision of an asymmetrical tensioner in conjunction with a configuration that further optimizes short-term, long-term performance and belt width.

To achieve the foregoing and other objects in accordance with the purpose of the present invention, as embodied and broadly described herein, an accessory drive system including a motor/generator is disclosed herein as defined by the features of claim 1. The invention is an improved belt drive system for a power plant. It is of the type having a crankshaft pulley, an accessory pulley, a motor/generator pulley, a belt tensioner, and a belt tensioner pulley. It also includes a power transmission belt trained about the crankshaft, accessory, motor/generator, and the belt tensioner pulleys. The power transmission belt has spans defined by terminations proximate to each of the pulleys, including intermediate spans beginning at the crankshaft pulley and ending at the motor/generator pulley following the direction of belt travel in normal operation. The first of the intermediate spans has a first termination end proximate the crankshaft pulley. The last of the intermediate spans has a last termination end proximate the motor/generator pulley. It is improved by the tensioner pulley being proximate a termination end of an intermediate span not being either the first termination end or the last termination end.

### Brief Description of the Drawings

The accompanying drawings, which are incorporated in and form part of the specification in which like numerals designate like parts, illustrate preferred embodiments of the present invention and together with the description, serve to explain the principles of the invention. In the drawings:
Figure 1 depicts a schematic representation of a preferred embodiment of an accessory belt drive system configuration including a motor/generator.
Figure 2 is a detail of a tensioner forming part of a preferred accessory belt drive system including a motor/generator.
Figure 3 depicts a schematic representation of an alternate preferred embodiment of an accessory belt drive system configuration including a motor/generator.
Figure 4 is a detail of an alternate tensioner forming part of an alternate preferred accessory belt drive system including a motor/generator.
Figure 5 is a detail of an alternate tensioner forming part of an alternate preferred accessory belt drive system including a motor/generator.
Figure 6 is a block diagram of a control signal path.
Figure 7 depicts a schematic representation of an alternate preferred embodiment of an accessory belt drive system configuration including a motor/generator.

### Detailed description of the Preferred Embodiments

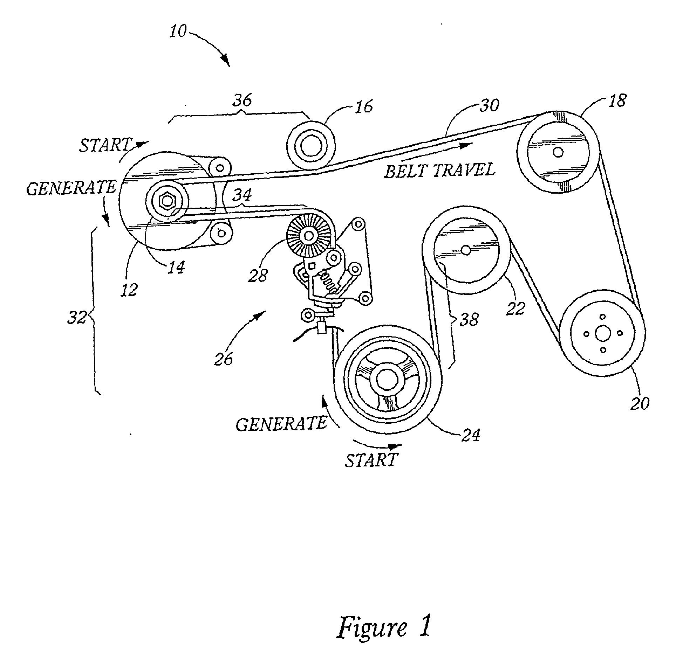

A preferred embodiment of an accessory belt drive system 10 is depicted in Figure 1. It includes motor/generator 12, motor/generator pulley 14, idler pulley 16, power steering pump pulley 18, air conditioning compressor pulley 20, water pump pulley 22, crankshaft pulley 24, tensioner 26, tensioner pulley 28, and power transmission belt 30. The portion of power transmission belt 30 that would otherwise obscure tensioner 26 is broken away.

While specific accessory pulleys in a specific geometrical arrangement are depicted, it should be recognized that the instant invention applies to various numbers and combinations of accessories and geometrical arrangements, including both serpentine and non-serpentine configurations, depending upon application. The configuration depicted is serpentine. Thus, power transmission belt 30 would ordinarily be of the v-ribbed type. However, the invention can be practiced with the inclusion of all belt types. Further, this depiction also can be viewed as one plane of belt/pulleys in an accessory belt drive system having multiple belts.

The arrow labeled "belt travel" indicates direction of belt travel during normal operation in both generate and start modes. To move downstream, along the path trained by power transmission belt 30, is to move in the same direction as belt travel. To move upstream is to move in the opposite direction of belt travel.

Moving downstream starting at crankshaft pulley 24, a first intermediate span 32 covers the distance beginning with a termination at the last point of contact between crankshaft pulley 24 and power transmission belt 30, and ending with a termination at the first point of contact between tensioner pulley 28 and power transmission belt 30. A last intermediate span 34 covers the distance beginning at the last point of contact between tensioner pulley 28 and power transmission belt 30 and ending at the first point of contact of motor/generator pulley 14 and power transmission belt 30. If pulleys were added, which contact either first intermediate span 32 or last intermediate span 34, additional intermediate spans would result. Further, start-slack-side span 36 spans the distance from the point of contact with motor/generator pulley 14 to the point of contact with idler pulley 16.

The direction of torque at motor/generator pulley 14 and at crankshaft pulley 24 reverses depending upon the mode of operation of accessory belt drive system 10, as indicated by the arrows labeled "start" and "generate", at each pulley 14 and 24, respectively. In the generate mode, crankshaft pulley 24 supplies all driving torque. Water pump pulley 22, air conditioning compressor pulley 20, power steering pump pulley 18, and motor/generator pulley 14 consume the driving torque, with minor consumption by idler pulley 16 and tensioner pulley 28. In start mode, motor/generator pulley 14 supplies all driving torque. Crankshaft pulley 24, water pump pulley 22, air conditioning compressor pulley 20, and power steering pump pulley 18 consume the driving torque, with minor consumption by idler pulley 16 and tensioner pulley 28.

Generally and regardless of mode of operation, if it were assumed that each of the pulleys is allowed to rotate freely, tension on every span would be the same and at static tension. Static tension is the result of the force applied to power transmission belt 30 by tensioner 26 via tensioner pulley 28 tending to lengthen the distance power transmission belt 30 is forced to travel about all of the pulleys. However, when torque is being supplied and consumed by the various pulleys, of the accessory belt drive system 10, such as when the accessory belt drive system 10 is operating, the tension in each span is modified.

In the conventional or generate mode, crankshaft pulley 24 and generate-tight-side span 38 supplies the driving torque and is the span with the greatest tension, respectively. At each span upstream of generate-tight-side span 38, tension upon power transmission belt 30 is reduced by the effect of each torque consuming pulley immediately preceding the span. Motor/generator pulley 14 presents the greatest load, in most cases. Accordingly, the largest difference in tension, due to load, normally appears when going from start-slack-side span 36 to last intermediate span 34. Overall, the trend continues to the point of where first intermediate span 32, with a termination at crankshaft pulley 24, has the least tension.

In the conventional accessory v-ribbed belt drive system, the fundamental design considerations are: 1) belt width (commonly denoted by number of ribs) and type selection related to torque anticipated to be supplied and consumed; and, 2) static tension selection to be below that which stresses either the belt or components of the system to the point of reducing the useful life of either below an acceptable term and above the point where unacceptable slippage begins. Further, belt type and width selection affects useful belt life. Also, there is interplay between these two fundamental design considerations.

A constant goal for the accessory belt drive system designer is to optimize both of these considerations, in light of cost and complexity concerns. Optimization is accomplished through manipulation of many geometric and material parameters known to those of ordinary skill in the art. Among these is arrangement of the driving and driven pulleys based upon inertial or other torque each presents.

Drive systems that include a motor/generator present new and difficult limitations and heretofore have alluded practical optimization. The root of the difficulties lies in the fact that the pulleys which supply the driving torque and present the greatest load and inertial torque are different depending upon mode of operation. Further, larger inertial torque loads are presented than normally encountered in a conventional drive system.

In the start mode, motor/generator 12 supplies the driving torque. Last intermediate span 34 is the span with the greatest tension. First intermediate span 32 has tension only slightly reduced by the small load presented by tensioner pulley 28. Unlike the generate mode, crankshaft pulley 24 presents the greatest load. Likewise, the largest tension differential, due to load, is between first intermediate span 32 and generate-tight-side span 38. As can be seen a layout that optimizes in the generate mode is substantially different from a layout that optimizes in the start mode.

The layout of the depicted preferred embodiment significantly optimizes accessory belt drive system 10 in certain applications for the combination of modes, particularly when coupled with tensioner 26 depicted in Figure 2. Tensioner 26 comprises tensioner pulley 28, main pivot 40, damper pivot 42, damper arm 44, damper shoe 46, damper race 48, biasing spring 50, ratchet teeth 52, pawl 54, pawl pivot 56, plunger 58, solenoid 60, and conductors 62. Tensioner pulley 28, damper race 48, ratchet teeth 52, biasing spring 50, and main pivot 40 are supported by tensioner frame 64. Biasing spring 50, in this embodiment, is a steel coil. Other resilient members, including elastomeric or pneumatic members, can be employed.

It will be noted that tensioner 26 is placed between first intermediate span 32 and last intermediate span 34. In the generate mode, first intermediate span 32 carries the least tension. Last intermediate span 34 carries tension not directly altered by the torque of motor/generator pulley 14. Tensioner 26 acts to place the static tension for the entire accessory belt drive system 10, downstream of crankshaft pulley 24 and upstream of motor/generator pulley 14. Biasing spring 50 acts to bias tensioner pulley 28. In the generate mode, pawl 58 and ratchet teeth 52 are disengaged, as depicted.

When allowed by condition of power transmission belt 30, biasing spring 50 causes the distanced spanned by biasing spring 50 to lengthen. In turn, tensioner pulley 28 supported by tensioner frame 64 revolves about main pivot 40 in the clockwise and tensioning direction indicated in Figure 2. Biasing spring 50 causes damper arm 44 to press damper shoe 46 against damper race 48. At the same time, the clockwise motion in conjunction with the geometrical relationship of main pivot with damper pivot causes damper race 46 to move clockwise under damper shoe 46, giving rise to a damping friction. The damping friction tends to subtract from the biasing that tensioner pulley 28 applies to power transmission belt 30. However, the clockwise movement and relationship of pivots 40 and 42, tend to lessen the mating force of shoe 46 with race 48. Thus, the damping friction is lessened when tensioner pulley 28 revolves in the tensioning direction.

When the condition of power transmission belt 30 forces tensioner pulley 28 to revolve in the loosening direction, by overcoming the force provided by biasing spring 50, the counterclockwise movement and relationship of main and damper pivots 40 and 42 tend to increase the mating force of shoe 46 with race 48. Thus, damping friction is increased when tensioning pulley 28 revolves in the loosening direction. The damping friction tends to add to the biasing that tensioner pulley 28 applies to power transmission belt 30. Accordingly, in the generate mode, tensioner 26 acts as a passive asymmetrically damped tensioner. This configuration and asymmetrical damping provide a substantial benefit toward optimizing accessory belt drive system 10, when operating in the generate mode.

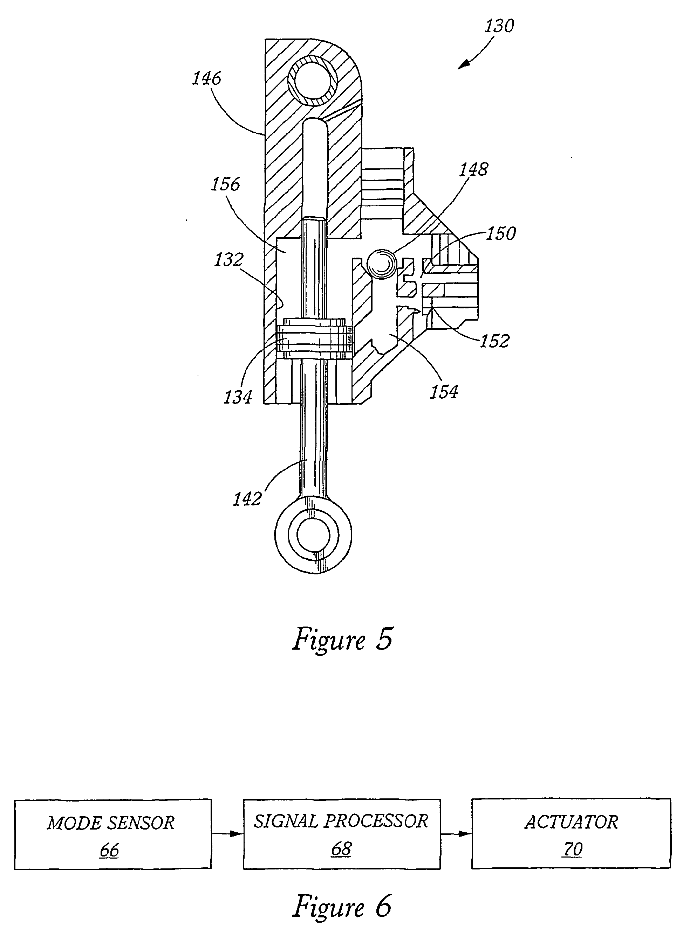

When accessory belt drive system 10 is to be operated in the start mode, mode sensor 66 (Figure 6) senses the presence of the start mode. The mode sensor can be a separate electrical switch or relay operated anytime the motor/generator 12 receives electrical power to begin to drive accessory belt drive system 10, or can be part of an automotive ignition switch. Mode sensor 66 is commonly found within a controller for the motor/generator. The signal that is produced by mode sensor 66 is passed to signal processor 68, which can be a variety of electrical circuits to process the signal and make it compatible with actuator 70. The elements of this signal path and associated components, mode sensor 66, signal processor 68, and actuator 70 are know by those of ordinary skill in the art. Actuator 70, of this preferred embodiment, comprises solenoid 60, having plunger 58 and conductors 62. While this preferred embodiment contemplates use of electrical signals, sensors, processors, and actuators, mechanical, hydraulic, and pneumatic, signals, sensors, processors, and actuators are also envisioned.

The signal to solenoid 60 is passed via conductors 62. Solenoid 60 reacts to the signal by raising plunger 58, causing pawl 58 to rotate about pawl pivot 56 to the point of engaging pawl 54 with ratchet teeth 52. When so configured with this locking factor, tensioner pulley 28 can ratchet in the tensioning direction but is restrained, or locked, from moving in the loosening direction.

As described above, last intermediate span 34 becomes the span with the greatest tension when accessory belt drive system 10 is in the start mode. The torque of crankshaft pulley 24 does not directly alter the tension upon first intermediate span 32. Start-slack-side span 36 becomes the span with the least tension. Without the operation of actuator 70, tensioner 26 would be forced to the limits of its travel and allow power transmission belt 30 to be trained about the path of shortest possible distance. The time it would take power transmission belt 30 to assume this new path would depend upon the amount of damping friction supplied by the combination damping shoe 46 and damping race 48. If a different damping configuration were used, as discussed below, then the time would depend upon the level of damping provided by the applied configuration.

However, the engagement of pawl 54 with teeth 52 holds tensioner 26, which in turn restrains power transmission belt 30 to the path along which it was trained just prior to accessory belt drive system 10 being placed in the start mode. Accordingly, tension on accessory belt drive system 10 does not lessen substantially when the mode is switched. Importantly, this allows the selection of a static tension, via spring rate of biasing spring 50 and overall geometry of tensioner 26, that is significantly lower than that allowed by configurations heretofore available, without short term performance suffering unduly.

When the mode switches, from start to generate, actuator 70 is deactivated, allowing pawl 54 to disengage from ratchet teeth 54, and allowing tensioner 26 to return to the generate mode described above.

The activation of actuator 70 can be based strictly upon input from mode sensor 66 or upon additional parameters found in signal processor 68. For instance, time delay can be built into operation of signal processor 68 such that actuator 70 remains active for a set time after mode sensor 66 indicates that the mode has switched. Further, an advantage may be found in deactivating actuator 70 after a set time period regardless of when mode sensor 66 signals a mode switch. Further, mode sensor 66 can sense engine r.p.m., engine manifold pressure, torque upon crankshaft pulley 24, or torque upon motor/generator pulley 14 for determining a switch in modes.

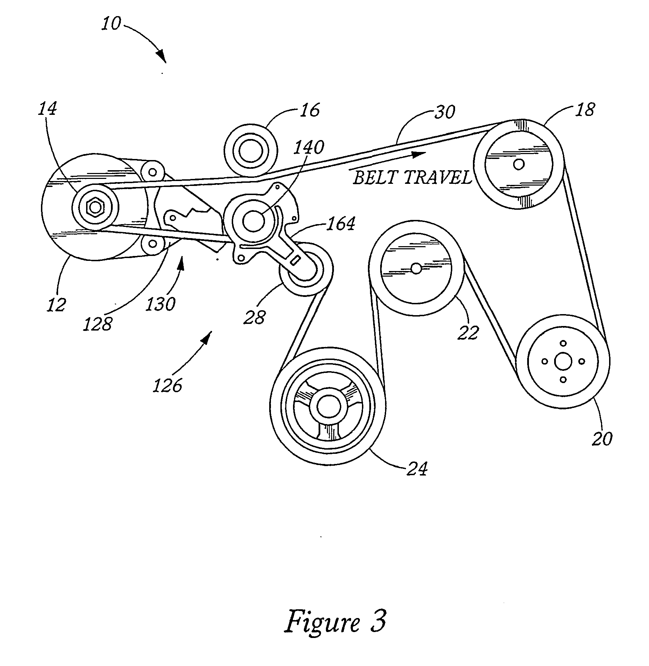

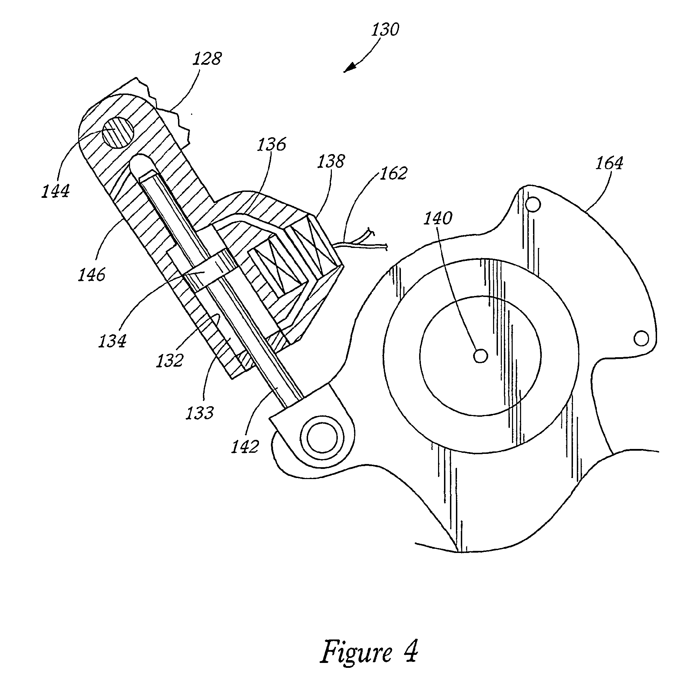

An alternative preferred embodiment is depicted in Figure 3. This embodiment is the same as the prior embodiment with the exception of alternative tensioner 126, including mounting plate 128, damping module 130, main pivot 140, and movable member 164. Damping module 130 is depicted in greater detail in Figure 4. Damping module 130 includes cylinder 132, piston 134, bypass tube 136, magnetic coil 138, connecting rod 142, connecting pin 144, body 146, and conductors 162. Cylinder 132 and bypass tube 136 are filled with rheological fluid 133. In this embodiment, rheological fluid 133 is magnetorheological in nature

Tensioner 126 has a resilient member (not depicted) that provides spring rate biasing and therefore biases moveable member 164 in the tensioning direction, counterclockwise. The resilient member can include a torsion spring, a convolute spring, or one of a number of other torque producing resilient members. Further, it can include a lever arm acted upon by a linear resilient member to produce torque. Movement of moveable member 164 around main pivot 140 is mechanically communicated to connecting rod 142. Movement of connecting rod 142 causes piston 134 to move within cylinder 132, which forces rheological fluid 133 to transfer from cylinder 132 on one side of piston 134 to the cylinder 132 on the other side of piston 134 via bypass tube 136. This causes rheological fluid 133 to pass through the core of magnetic coil 138. Energization of magnetic coil 138 via conductors 162 impresses a magnetic field upon magnetorheological fluid 133 and thereby increases the viscosity of magnetorheological fluid 133.

When magnetic coil 138 is not energized, rheological fluid 133 passes through bypass tube 136 in a relatively unrestricted manner. Thus movement of tensioner 126 is relatively free of damping. However, as coil 138 becomes energized, the resulting increase in viscosity of rheological fluid 133 creates a restriction of the flow of rheological fluid 133 through bypass tube 136. There is a direct relationship between the intensity of the field impressed upon rheological fluid 133 and its resulting viscosity. Depending upon the size and shape chosen for bypass tube 136, damping can be elevated to the point of essentially locking tensioner 126 in place.

The signal path depicted in Figure 6 applies to this embodiment, as well. This embodiment allows additional flexibility on how, when and to what degree damping will be applied to tensioner 126. Selection of mode sensor 66 and manipulation of the logic within signal processor 68 allows fine-tuning of tensioner 126 damping. For instance, damping can be selected to be at a very high level, but less than that necessary to lock tensioner 126 in place, immediately upon accessory belt drive system 10 mode switching to start. Tensioner 126 would accordingly be allowed to respond to the mode change by a slight relaxation in the loosening direction. Then after a brief period, the damping can be increased to lock tensioner 126 in the new location for the duration of the time accessory belt drive system 10 is in the start mode. Further, mode sensor 66 can be monitoring the activity or position of tensioner 126. This information can be processed by signal processor 68 to intelligently damp or lock tensioner 126 to accommodate accessory belt drive system 10 oscillation or vibration or to mimic the ratcheting effect of the prior described preferred embodiment.

Rheological fluid 133 can also be an electrorheological in nature. In such case, electrostatic plates (not depicted) replace magnetic coil 138. The general operation and relationships remain the same. Further, the ratcheting arrangement of the first described preferred embodiment comprising ratchet teeth 52, pawl 54, plunger 58, solenoid 60 and conductors 62 can be incorporated into tensioner 126 by affixing teeth 52 upon moveable member 164 and affixing the remaining portions in a stationary manner.

Figure 5 depicts another embodiment specific to damping module 130. Here, hydraulic fluid 156 replaces rheological fluid 133. Accordingly, magnetic coil 138, bypass tube 136, and conductors 162 are absent. In this embodiment, when tensioner 126 is moving in the tensioning direction, hydraulic fluid 156 is forced from the lower portion of cylinder 132 into major passageway 154, passed check ball 148 and into upper portion of cylinder 132. Since major passageway 154 is relatively large, tensioning direction of operation offers little damping. When tensioner 126 moves in the loosening direction, hydraulic fluid 156 is forced from upper portion of cylinder 132 into minor passageway 150, into the lower portion of major passageway 154 then into lower portion of cylinder 132. Minor passageway 150 is relatively small. Thus, substantial damping occurs in this direction of operation of tensioner 126. Control piston 152 is depicted as substantially retracted. If an actuator, similar to that depicted in Figure 2, is included, control piston 152 can be selectively extended or retracted. The description of operation immediately above assumes control piston 152 to be fully retracted. If control piston 152 is fully extended, tensioner 126 can still move in the tensioning direction with minimal damping. However, minor passageway 150 is obstructed causing tensioner 126 to be locked against movement in the loosening direction. This embodiment enjoys the same flexibility of damping in the loosening direction as does the embodiment of Figure 4.

An additional embodiment similar to that depicted in Figure 2 is also envisioned. The ratchet teeth 52 and the mating teeth of pawl 54 can each be replaced with a form of teeth that are straight, as opposed to the depicted saw-toothed configuration. Actuation then locks tensioner 26 in both tightening and loosening direction. Ratcheting becomes unavailable. Further, all these teeth can be replaced with corresponding braking surfaces. This allows large control over damping being offered by tensioner 26 without bringing damping to the point of locking.

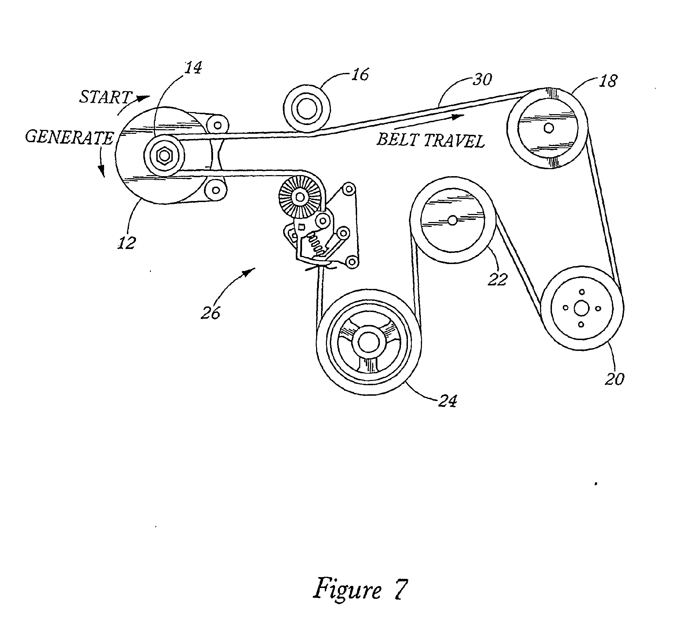

It is further contemplated that certain applications can be fitted with tensioner 26, without active damping or locking as depicted in Figure 7. However, all embodiments depicted incorporate some form of direction reversal resistance, whether active, passive, damping, locking or ratcheting, any time power transmission belt 30 forces tensioner 26 or 126 in a belt loosening direction.

The present invention found in the described embodiments accomplishes significant optimization of long-term and short-term performance while, at the same time, substantially minimizing cost and complexity.

## Claims

1. A belt drive system for a power plant of the type having:
- a crankshaft pulley (24),
- an accessory pulley (18/20122),
- a motor/generator pulley (14) in mechanical communication with a motor/generator,
- a belt tensioner (26),
- a belt tensioner pulley (28), and
- a power transmission belt (30) trained about said crankshaft pulley, said accessory pulley, said motor/generator pulley, and said belt tensioner pulley,
- said power transmission belt (30) having spans defined by terminations proximate to each of said pulleys, including intermediate spans beginning at said crankshaft pulley (24) and ending at said motor/generator pulley (14) following the direction of belt travel in normal operation, further including
-- a first span (32) of said intermediate spans having a first termination end proximate said crankshaft pulley (24) and
-- a last span (34) of said intermediate spans having a last termination end proximate said motor/generator pulley (14),
- said tensioner pulley (28) being proximate a termination end of an intermediate span not being either said first termination end or said last termination end,
- said belt tensioner (26) being asymmetrically biased by means of a bias in a direction tending to cause said power transmission belt (30) to be under tension,
- said asymmetrical biasing being
-- no more than that provided by a spring rate bias, when external forces acting upon said belt tensioner (26) and said tensioner pulley are less than necessary to overcome said spring rate bias and would thereby tend to cause said tensioner pulley to move in an increasing belt tension direction, and
-- that which results from said spring rate bias and a direction reversal resistance, when said external forces acting upon said tensioner and said tensioner pulley are greater than that necessary to overcome said spring rate bias and would thereby tend to cause said tensioner pulley to move in a decreasing belt tension direction,
**characterised in that**
- said direction reversal resistance is intermittently applied in response to operation mode of said motor/generator.

2. The belt drive system of claim 1, further comprising:
said tensioner pulley (28) being proximate a second termination end of said first intermediate span (32) being opposite from said first termination end.

3. The belt drive system of claim 1, wherein:
said direction reversal resistance results from a damping factor responding to movement of said tensioner (26) in a direction of decreasing belt tension.

4. The belt drive system of claim 1, wherein:
said direction reversal resistance results from a locking factor responding to movement of said tensioner (26) in a direction of decreasing belt tension.

5. The belt drive system of claim 1, further comprising:
said intermittent direction reversal resistance application being said tensioner (26) being damped at a first damping level in the decreasing belt tension direction when said motor/generator is operating in a motor mode and said tensioner (26) being damped at a second damping in the decreasing belt tension direction when said motor/generator is operating in a generator mode.

6. The belt drive system of claim 1, further comprising:
said intermittent direction reversal resistance application being said tensioner (26) being locked against movement in the decreasing belt tension direction when said motor/generator is operating in a motor mode and said tensioner (26) being not locked against movement in the decreasing belt tension direction when said motor/generator is operating in a generator mode.

7. The belt drive system of claim 1, further comprising:
said intermittent direction reversal resistance application responding to a control input resulting from said motor/generator operation mode.

8. The belt drive system of claim 7, wherein:
said control input is an electrical impulse.

## Patentansprüche

1. Riemen-Antriebssystem für ein Antriebsaggregat, mit:
- einer Kurbelwellen-Riemenscheibe (24),
- einer Hilfs-Riemenscheibe (18/20/22),
- einer Motor-/Generator-Riemenscheibe (14) in mechanischer Verbindung mit einem Motor/Generator,
- einem Riemenspanner (26),
- einer Riemenspannrolle (28), und
- einem Leistungsriemen (30), der um die Kurbelwellen-Riemenscheibe, die Hilfs-Riemenscheibe die Motor-/Generator-Riemenscheibe und die Riemenspannrolle umläuft,
- wobei der Leistungsriemen (30) Abschnitte aufweist, die von nahe jeder Riemenscheibe angeordneten Abschlüssen begrenzt sind, einschließlich Zwischenabschnitten, die an der Kurbelwellen-Riemenscheibe (24) beginnen und an der Motor-/Generator-Riemenscheibe (14) in Richtung des Riemenlaufs bei Normalbetrieb enden, aufweist, wobei ferner
- sich unter den Zwischenabschnitten ein erster Abschnitt (32) mit einem ersten Abschlussende nahe der Kurbelwellen-Riemenscheibe (24) und
- ein letzter Abschnitt (34) mit einem letzten Abschlussende nahe der Motor-/Generator-Riemenscheibe (14) befindet,
- wobei die Spannrolle (28) nahe einem Abschlussende eines Zwischenabschnitts angeordnet ist, welches weder das erste Abschlussende noch das letzte Abschlussende ist,
- wobei der Riemenspanner (26) mittels einer Vorspannung asymmetrisch in eine Richtung vorgespannt ist, welche bewirkt, dass der Leistungsriemen (30) unter Spannung steht,
- wobei die asymmetrische Vorspannung
- nicht größer ist als diejenige einer Federrate, wenn auf den Riemenspanner (26) und die Spannrolle wirkende externe Kräfte kleiner sind als zum Überwinden der Vorspannung der Federrate erforderlich und dadurch bewirken, dass sich die Spannrolle in Richtung zu einer Vergrößerung der Riemenspannung bewegt, und
- aus der Federratenvorspannung und einem Richtungsumkehrwiderstand resultiert, wenn die auf den Spanner und die Spannrolle wirkenden externen Kräfte größer sind als zum Überwinden der Vorspannung der Federrate erforderlich und dadurch bewirken, dass sich die Spannrolle in Richtung auf eine Verkleinerung der Riemenspannung bewegt,
**dadurch gekennzeichnet, dass**
- der Richtungsumkehrwiderstand in Reaktion auf den Betriebsmodus des Motors/Generators intermittierend aufgebracht wird.

2. Riemenantriebssystem nach Anspruch 1, bei dem ferner:
die Spannrolle (28) nahe einem zweiten Abschlussende des ersten Zwischenabschnitts (32) angeordnet ist, das dem ersten Abschlussende gegenüberliegt.

3. Riemenantriebssystem nach Anspruch 1, bei dem:
der Richtungsumkehrwiderstand aus einem auf das Bewegen des Spanners (26) in Richtung auf eine Verkleinerung der Riemenspannung ansprechenden Dämpffaktor resultiert.

4. Riemenantriebssystem nach Anspruch 1, bei dem:
der Richtungsumkehrwiderstand aus einem auf das Bewegen des Spanners (26) in Richtung auf eine Verkleinerung der Riemenspannung ansprechenden Blockierfaktor resultiert.

5. Riemenantriebssystem nach Anspruch 1, bei dem ferner:
das intermittierende Aufbringen des Richtungsumkehrwiderstands das Dämpfen der Spannrolle (26) bei einem ersten Dämpfpegel in Richtung auf eine Verkleinerung der Riemenspannung ist, wenn der Motor/Generator in einem Motormodus arbeitet, und das Dämpfen der Spannrolle (26) bei einer zweiten Dämpfung in Richtung auf eine Verkleinerung der Riemenspannung ist, wenn der Motor/Generator in einem Generatormodus arbeitet.

6. Riemenantriebssystem nach Anspruch 1, bei dem ferner:
das intermittierende Aufbringen des Richtungsumkehrwiderstands das Blockieren des Spanners (26) gegen das Bewegen in Richtung auf eine Verkleinerung der Riemenspannung ist, wenn der Motor/Generator in einem Motormodus arbeitet, und das Nichtblockieren des Spanners (26) gegen das Bewegen in Richtung auf eine Verkleinerung der Riemenspannung ist, wenn der Motor/Generator in einem Generatormodus arbeitet.

7. Riemenantriebssystem nach Anspruch 1, bei dem ferner:
das intermittierende Aufbringen des Richtungsumkehrwiderstands auf ein aus dem Motor-/Generator-Betriebsmodus resultierendes Steuer-Eingangssignal anspricht.

8. Riemenantriebssystem nach Anspruch 7, bei dem:
das Steuer-Eingangssignal ein elektrischer Impuls ist.

## Revendications

1. Système d'entraînement de courroie pour un groupe motopropulseur du type comportant :
- une poulie de vilebrequin (24),
- une poulie pour accessoires (18/20/22),
-- une poulie de moteur/générateur (14) en communication mécanique avec un moteur/générateur,
- un tendeur de courroie (26),
- une poulie de tendeur de courroie (28), et
- une courroie de transmission de puissance (30) entraînée autour de ladite poulie de vilebrequin, ladite poulie d'accessoires, ladite poulie de moteur/générateur et ladite poulie de tension de courroie,
- ladite courroie de transmission de puissance (30) présentant des portées définies par les terminaisons à proximité de chacune desdites poulies, comprenant des portées intermédiaires commençant au niveau de ladite poulie de vilebrequin (24) et se terminant au niveau de ladite poulie de moteur/générateur (14) suivant la direction de déplacement de la courroie en fonctionnement normal, comprenant en outre
-- une première portée (32) parmi lesdites portées intermédiaires ayant une première extrémité de terminaison à proximité de ladite poulie de vilebrequin (24), et
-- une dernière portée (34) desdites portées intermédiaires ayant une dernière extrémité de terminaison à proximité de ladite poulie de moteur/générateur (14),
- ladite poulie de tendeur (28) étant à proximité d'une extrémité de terminaison d'une portée intermédiaire qui n'est ni ladite première extrémité de terminaison, ni ladite dernière extrémité de terminaison,
- ledit tendeur de courroie (26) étant sollicité de manière asymétrique au moyen d'une sollicitation dans un sens tendant à amener ladite courroie de transmission de puissance (30) à être sous tension,
- ladite sollicitation asymétrique étant
- - non supérieure à celle procurée par une sollicitation par constante de rappel, lorsque des forces externes agissant sur ledit tendeur de courroie (26) et ladite poulie de tendeur sont inférieures à ce qui est nécessaire pour surmonter ladite sollicitation par constante de rappel et tendraient en conséquence à amener ladite poulie de tendeur à se déplacer dans un sens de tension de courroie croissant, et
- - celle qui résulte de ladite sollicitation de constante de rappel et d'une résistance en sens inverse, lorsque lesdites forces externes agissant sur ledit tendeur et ladite poulie de tendeur sont supérieures à ce qui est nécessaire pour surmonter ladite sollicitation de constante de rappel et tendraient en conséquence à amener ladite poulie de tendeur à se déplacer dans un sens de tension de courroie décroissante,
**caractérisé en ce que**
ladite résistance en sens inverse est appliquée par intermittence en réponse au mode de fonctionnement dudit moteur/générateur.

2. Système d'entraînement de courroie selon la revendication 1, comprenant en outre :
ladite poulie de tendeur (28) qui est à proximité d'une seconde extrémité de terminaison de ladite première portée intermédiaire (32) qui est en face de ladite première extrémité de terminaison.

3. Système d'entraînement de courroie selon la revendication 1, dans lequel :
ladite résistance en sens inverse résulte d'un facteur d'amortissement en réponse au déplacement dudit tendeur (26) dans un sans de tension de courroie décroissante.

4. Système d'entraînement de courroie selon la revendication 1, dans lequel :
ladite résistance dans le sens inverse résulte d'un facteur de blocage en réponse à un déplacement dudit tendeur (26) dans un sens de tension de courroie décroissante.

5. Système d'entraînement de courroie selon la revendication 1, comprenant en outre :
ladite application de résistance en sens inverse intermittente étant telle que ledit tendeur (26) est amorti à un premier niveau d'amortissement dans le sens de tension de courroie décroissante lorsque ledit moteur/générateur fonctionne dans un mode de moteur et que ledit tendeur (26) est amorti à un second niveau d'amortissement dans le sens de tension de courroie décroissante lorsque ledit moteur/générateur fonctionne dans un mode de générateur.

6. système d'entraînement de courroie selon la revendication 1, comprenant en outre :
ladite application de résistance dans le sens inverse par intermittence qui est telle que ledit tendeur (26) est bloqué vis-à-vis d'un mouvement dans le sens de tension de courroie décroissante lorsque ledit moteur/générateur fonctionne dans un mode de moteur et que ledit tendeur (26) n'est pas bloqué vis-à-vis d'un déplacement dans le sens de tension de courroie décroissante lorsque ledit moteur/générateur fonctionne dans un mode de générateur.

7. Système d'entraînement de courroie selon la revendication 1, comprenant en outre le fait que :
ladite application de résistance en sens inverse par intermittence en réponse à une entrée de commande résulte dudit mode de fonctionnement du moteur/générateur.

8. Système d'entraînement de courroie selon la revendication 7, dans lequel :
ladite entrée de commande est une impulsion électrique.
